# EUROPÄISCHE PATENTSCHRIFT

(11) **EP 1 116 962 B1**
(45) Veröffentlichungstag und Bekanntmachung des Hinweises auf die Patenterteilung: **02.04.2008**
(21) Anmeldenummer: 00127045.3
(22) Anmeldetag: 09.12.2000
(51) Int. Cl.: G01V 8/10, G06T 7/20, G08B 13/194, F41G 7/00

(54) **Verfahren zur autonomen Detektion von Hubschraubern**
Method for the autonomous detection of helicopters
Procédé pour la détection autonome d'hélicoptères

(30) Priorität: 14.01.2000 DE 10001282
(43) Veröffentlichungstag der Anmeldung: 18.07.2001
(73) Patentinhaber: LFK-Lenkflugkörpersysteme GmbH, 86529 Schrobenhausen (DE)
(72) Erfinder: Rockinger, Oliver, Dr., 88045 Friedrichshafen (DE); Topp, Jürgen A., Dr., 88048 Friedrichshafen (DE); Fechner, Thomas, 12249 Berlin (DE)
(74) Vertreter: Hummel, Adam

(56) Entgegenhaltungen:
- EP-A- 0 564 858
- DE-A- 2 847 233
- DE-A- 4 423 758
- DE-C- 19 505 791
- US-A- 5 883 969

## Beschreibung

Die Erfindung bezieht sich auf ein Verfahren zur Erkennung tieffliegender Hubschrauber von einer schnell bewegten fliegenden Plattform, wie einem zielsuchenden und zielverfolgenden Flugkörper, aus.
Solch eine Vorrichtung ist beispielsweise aus DE 195 05 791 bekannt. Dieser Vorrichtung liegt ein Flugkörpersystem zugrunde, das während einer Suchphase einen gegebenen Suchbereich nach dem Vorhandensein eines Zieles absucht und, falls ein Ziel gefunden ist, dieses verfolgt.

Die eigentliche Zieldetektion erfolgt durch eine Auswertung der durch die Rotorblätter modulierten Eigenstrahlung des Hubschraubers. Dieses Verfahren zur Hubschrauberdetektion oder allgemein zur Detektion modulierter Strahlungsquellen ist beispielsweise aus DE 37 33 681 oder DE 28 47 233 bekannt.

Dieses Detektionsverfahren hat jedoch die folgenden Nachteile:
- Alleine mit diesem Verfahren kann von einer bewegten Plattform aus kein Suchvorgang und damit auch keine Detektion realisiert werden, da ein potentielles Zielobjekt stets eine bestimmte Zeit lang beobachtet werden muß um die Modulationsfrequenz zu bestimmen. Ein Absuchen eines vorgegebenen Bereiches kann so nicht realisiert werden.
- Diese obengenannte Beobachtungszeit ist abhängig vom Sensor, der Drehfrequenz des Hubschrauberrotors und der Abtastfrequenz des Sensors. Typische Beobachtungszeiten liegen im Bereich von 0.2 und 0.5 sec. Während dieser Zeit kann der Flugkörper bereits soweit geflogen sein, daß das Ziel durch aerodynamische Manöver nicht mehr erreicht werden kann.
- Während der gesamten Beobachtungszeit muß der Suchkopf auf das potentielle Ziel exakt stabilisiert werden, diese Stabilisierung gelingt in der Praxis jedoch nur ungenau. Es ist daher mit einer großen Zahl von Falschdetektionen aufgrund von stark strukturierten Bildhintergründen und einem unvollständig stabilisiertem Suchkopf zu rechnen.

Ein anderes Verfahren zum Erfassen von Hubschraubern ist aus DE 44 23 758 und EP 0 690 412 bekannt. Bei dieser Vorrichtung wird ein Bildsensor mit zwei Bildelementen vorgeschlagen, die dem Bild des Gesichtsfeldes in zwei aufeinanderfolgenden, durch ein kurzes Zeitintervall getrennten Zeitpunkten entsprechen. Diese Bildmuster werden einer Differenzbildung zugeführt. An Stellen des Hintergrundes sind die Helligkeitswerte beider Bildmuster ähnlich und löschen sich bei der Differenzbildung aus, die Rotorblätter eines Hubschraubers haben sich jedoch in dem betreffenden Zeitintervall weitergedreht und bleiben bei der Differenzbildung erhalten. In der vorgeschlagenen Ausführungsform weist dieses Verfahren die folgenden Nachteile auf:
- Die vorgeschlagene Vorrichtung erfordert zwei Bildsensoren, die exakt gegeneinander zu positionieren sind, was hohe Kosten verursacht. Eine Realisierungsform mit nur einem Bildsensor ist daher aus wirtschaftlichen Gründen vorzuziehen.
- Die weitere Auswertung des Differenzbildes wird in o.a. Literaturstellen nicht beschrieben, insbesondere geht aus den Literaturstellen nicht hervor, wie die Positionsbestimmung des Hubschraubers innerhalb des Bildfeldes selbst sowie die Störunterdrückung bei ungewollter Kamerabewegung erfolgt.

Die Grundidee der bildpunktweisen Differenzbildung zwischen zwei zeitlich aufeinanderfolgenden Bildern wird auch von Celenk und Resa (in: 'Moving Object Tracking in Industrial Work Stations', Advances in Instrumentation, Proceedings of the ISA 88 Intl. Conference and Exhibit, Bd. 43, Teil 1, 1988, Seiten 289-304) zur Verfolgung sich bewegender Objekte beschrieben. Im Vordergrund steht dabei die Objektverfolgung unter Einsatz einer stationären Kamera. Das Differenzbild zweier zeitlich direkt aufeinanderfolgender Bilder wird dabei zur Objektdetektion (nicht aber Objektklassifikation und Erkennung bestimmter Objektkategorien) und zur Objektverfolgung eingesetzt und setzt in der beschriebenen Realisierungsform eine unbewegte Kamera zwingend voraus.

Der Erfindung liegt die Aufgabe zugrunde, die Detektion und Identifikation von Hubschraubern von einer schnell fliegenden Plattform aus in einer möglichst kurzen Zeit zu realisieren. Hierzu werden abbildende Sensoren, sogenannte focal plane arrays mit einer hohen Ortsauflösung und Empfindlichkeit im infraroten Wellenlängenbereich eingesetzt. Eine typische Ortsauflösung eines focal plane arrays liegt bei 256 x 256 Bildpunkten. Ausgehend hiervon kann die Detektion und Identifikation eines Hubschraubers vorteilhaft mit einem Bildverarbeitungsverfahren realisiert werden, bei dem die hohe Auflösung des Bildsensors ausgenutzt wird.

Das besondere und nicht tarnbare Kennzeichen eines Hubschraubers ist dessen sich schnell drehender Hauptrotor. Durch die Luftreibung erhitzen sich die Rotorblätter und können so mit einem im Bereich der thermischen Wärmestrahlung empfindlichen bildgebenden Sensor erfaßt werden. Zusätzlich ist ein Hubschrauber durch die hohe Strahlungsintensität der Triebwerke gekennzeichnet. Ein Hubschrauber ist daher im Infrarotbereich durch den schnell drehenden Hauptrotor und das heiße Triebwerk eindeutig gekennzeichnet. Es ist bekannt, Bewegungen innerhalb einer Bildsequenz zu identifizieren, indem die bildpunktweise Differenz zweier aufeinanderfolgender Bilder berechnet wird. Die unbewegten Bildeile sind dann innerhalb des Differenzbildes durch den Wert Null gekennzeichnet, bewegte Bildregionen sind an positiven und negativen Werten ungleich Null zu erkennen.

Ein vorteilhaftes Vorgehen zur Detektion eines Hubschraubers besteht darin, diesen anhand seines Hauptrotors zu erkennen. Erschwert wird die Detektionsaufgabe jedoch durch die Tatsache, daß sich die Hubschrauber in der beschriebenen Anwendung typischerweise in Bodennähe und hinter Deckungen befinden. Gleichzeitig muß von einem stark strukturiertem Bildhintergrund ausgegangen werden, der die Bildauswertung erheblich erschwert, so daß eine direkte Bildauswertung mit zufriedenstellender Leistung nicht realisierbar ist.

Diese Problematik wird erfindungsgemäss gelöst werden, wenn statt eines einzelnen Bildes zwei Bilder ausgewertet und diese bildpunktweise voneinander subtrahiert werden. Da sich der Bildhintergrund zwischen zwei aufeinanderfolgenden Bildern nicht bewegt, der Hauptrotor des Hubschraubers jedoch schon, kann dieser im Differenzbild vereinfacht detektiert werden. Dazu wird das bildpunktweise berechnete Differenzbild durch Anwendung eines bipolaren Schwellwertes, für die positiven und negativen Bildanteile, trinarisiert und die so entstehenden Segmente nach festgelegten Gültigkeitskriterien ausgewählt. Vorteilhaft sind dabei die Kriterien minimale Segementfläche, maximale Segmentfläche und die minimale Exzentrizität eines Segments. Die nach vorstehenden Kriterien gültigen Segmente werden durch ihre angepaßte Gerade, die die gleiche Winkellage wie das Segment aufweist, beschrieben. Durch die Berechnung der paarweisen Schnittpunkte aller Segmente kann dann das Rotordrehzentrum ermittelt werden. Liegen alle die paarweisen Schnittpunkte eng benachbart, so kann davon ausgegangen werden, daß das detektierte Objekt ein Hubschrauber ist.

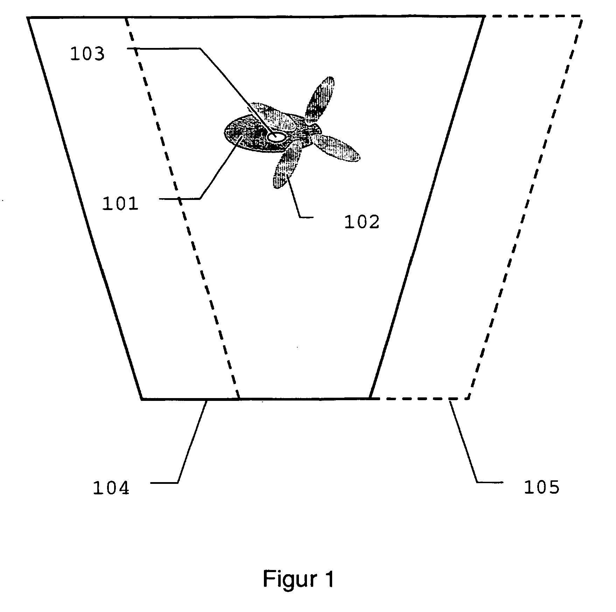

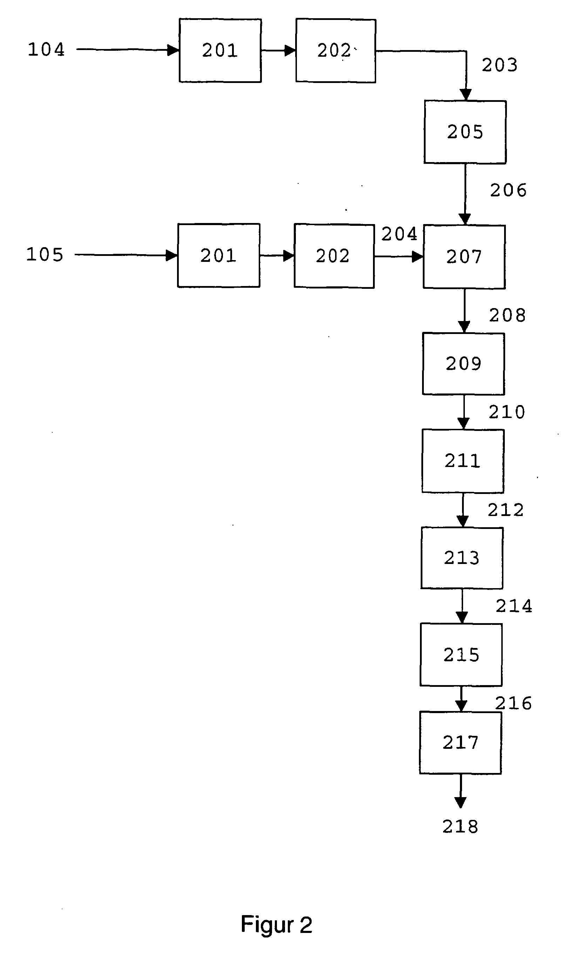

Die Erfindung wird anhand der Figuren 1 und 2 erläutert. Es zeigen:
- Figur 1: in schematischer Darstellung den zu detektierenden Hubschrauber und eine beispielhafte Abtastung des Suchbereiches während des Suchvorganges.
- Figur 2: in schematischer Darstellung das vorgeschlagene Verfahren zur Detektion und Identifikation von Hubschraubern.

In Figur 1 ist der Hubschrauber 101 während des Suchvorganges dargestellt. Durch die Luftreibung erhitzen sich die Rotorblätter 102 und sind daher mittels eines bildgebenden Infrarotsensors sichtbar. Gleichzeitig sind auch die heißen Triebwerksabgase 103 im Infrarotbild sichtbar. Während des Suchvorganges wird der relevante Suchbereich mittels eines bildgebenden Infrarotsensors so abgetastet, daß zwischen zwei zeitlich direkt aufeinanderfolgenden und auf den Boden projizierten Sehfeldern 104 und 105 eine Überlappung von mindestens der Hälfte eines Sehfeldes besteht. Dadurch wird sichergestellt, daß jeder Punkt des Suchbereiches in mindestens zwei direkt aufeinanderfolgenden Bildern zu sehen ist und das Differenzbildverfahren angewendet werden kann.

In Figur 2 sind die Details des Detektions- und Identifikationsverfahrens dargestellt. Die beiden zeitlich direkt aufeinanderfolgenden Bilder 104 und 105 (aus Figur 1) werden jeweils getrennt voneinander einem Schwellwertdiskriminator 201 zugeführt, dessen Schwelle so eingestellt ist, daß die heißen Triebwerksabgase 103 des Hubschraubers oberhalb dieser Schwelle liegen und so erkannt werden. Der Regionenextraktor 202 extrahiert aus den Gesamtbildern 104 und 105 jetzt kleine Bildbereiche 203 und 204, die jeweils um die vom Schwellwertdiskriminator gelieferten Bildpositionen zentriert sind. Um die Berechnung des Differenzbildes durchführen zu können, muß eine der beiden vom Regionenextraktor erzeugten Bildregionen 203 vom Lagekorrektor 205 in ihrer Lage relativ zur zweiten Bildregion 204 korrigiert werden. Der Differenzbildner 207 berechnet die bildpunktweise Differenz 208 der aktuellen Bildregion 204 und der lagekorrigierten Bildregion 206 des ersten Bildes 104. Durch einen bipolaren Schwellwertdiskriminator 209 wird aus dem Differenzbild 208 ein bipolares Trinärbild 210 erzeugt, dessen Segmente von dem Segementgültigkeitsbewerter 211 auf ihre Relevanz hinsichtlich der Zugehörigkeit zum Hauptrotor 102 eines Hubschraubers untersucht werden. Die gültigen Segmente 212 werden dann von Geradengenerator 213 durch ihre angepaßten Geraden beschrieben. Das Ergebnis des Geradengenerators 214 wird dem Schnittpunktberechner 215 zugeführt, innerhalb dessen die Berechnung aller paarweise entstehenden Schnittpunkte realisiert wird. Die Lage aller Schnittpunkte wird gespeichert und an einen Entscheider 217 übermittelt. Abhängig davon, ob sich eine klare Ballung von Schnittpunkten herausbildet fällt die Entscheidung 218 ob ein Hubschrauber vorhanden ist oder jedoch ein Falschziel vorliegt.

## Patentansprüche

1. Verfahren zur autonomen Detektion von Hubschraubern von einer fliegenden Plattform aus mit einem bildgebenden Sensor, **dadurch gekennzeichnet, dass**
- die relevanten Bildregionen zweier aufeinanderfolgender Bilder bildpunktweise voneinander subtrahiert werden und
- innerhalb des so entstehenden Differenzbildes die für die Detektion gültigen Segmente durch ein Schwellwertverfahren bestimmt werden, in dem auf das Differenzbild ein Schwellwert zur Trinarisierung des Bildes angewandt wird, und die bipolaren Segmente des Trinärbilds auf ihre Relevanz hinsichtlich der Zugehörigkeit zum Hauptrotor eines Hubschraubers untersucht werden, und
- an diese für die Detektion gültigen Segmente Geraden gleicher Orientierung angepasst werden und
- die Geraden aller Segmente paarweise miteinander geschnitten werden, und
- die paarweisen Schnittpunkte aller Geraden berechnet werden und die entstehenden Schnittpunkte hinsichtlich ihrer örtlichen Zusammenballung untersucht werden.

2. Verfahren nach Anspruch 1, **dadurch gekennzeichnet, dass** der relevante Suchbereich am Boden von dem bildgebenden Sensor so abgetastet wird, dass die örtliche Überlappung zweier aufeinanderfolgender Sehfelder mindestes die Hälfte eines Sehfeldes beträgt.

3. Verfahren nach Anspruch 1, **dadurch gekennzeichnet, dass** innerhalb jeden Bildes ein Schwellwertverfahren zur Bestimmung der Position der hellen Bildregionen angewandt wird.

4. Verfahren nach Anspruch 1, **dadurch gekennzeichnet, dass** die Position der hellen Bildregionen zweier zeitlich direkt aufeinanderfolgender Bilder einander örtlich zugeordnet werden.

5. Verfahren nach Anspruch 1, **dadurch gekennzeichnet, dass** vor Durchführung der bildpunktweisen Subtraktion eine Lagekorrektur der einen Bildregion erfolgt.

6. Verfahren nach Anspruch 5, **dadurch gekennzeichnet, dass** auf das Differenzbild ein bildabhängiger adaptiver Schwellwert zur Trinarisierung des Bildes angewandt wird.

## Claims

1. A method for the autonomous detection of helicopters from a flying platform with an imaging sensor,
**characterised in that**
- the relevant image regions of two successive images are subtracted from each other image-point-wise, and
- within the differential image that thus results the segments that are valid for the detection are determined by means of a threshold-value method, in which a threshold value is applied to the differential image in order to trinarize the image, and the bipolar segments of the trinary image are investigated for their relevance with regard to association with the main rotor of a helicopter, and
- straight lines of the same orientation are matched to these segments that are valid for the detection, and
- the straight lines of all the segments are intersected in pairs with each other, and
- the paired points of intersection of all the straight lines are calculated, and the resultant points of intersection are investigated with regard to their local concentration.

2. A method according to claim 1, **characterised in that** the relevant search area on the ground is scanned by the imaging sensor in such a way that the local overlapping of two successive visual fields amounts to at least half of one visual field.

3. A method according to claim 1, **characterised in that** a threshold-value method is applied within each image in order to determine the position of the light image regions.

4. A method according to claim 1, **characterised in that** the position of the light image regions of two images that follow each other directly in time are associated with each other locally.

5. A method according to claim 1, **characterised in that** before carrying out the image-point-wise subtraction positional correction of the one image region is effected.

6. A method according to claim 5, **characterised in that** an image-dependent adaptive threshold value is applied to the differential image in order to trinarize the image.

## Revendications

1. Procédé de détection autonome d'hélicoptères à partir d'une plate-forme volante comprenant un détecteur générateur d'image,
**caractérisé en ce qu'**
on retranche les deux régions d'image, concernées de deux images successives, par une soustraction point par point, et
- à l'intérieur de l'image de différence ainsi obtenue on détermine les segments valables pour la détection par un procédé à seuil selon lequel on applique à l'image de différence un seuil pour rendre l'image ternaire,
- on examine les segments bipolaires de l'image ternaire quant à leur caractère déterminant du point de vue de l'appartenance au rotor principal d'un hélicoptère,
- on adapte à ces segments valables pour la détection, des droites de même orientation,
- on coupe par paires, les droites de tous les segments, et
- on calcule les points d'intersection par paires pour toutes les droites et on analyse la concordance locale des points de coupe ainsi formés.

2. Procédé selon la revendication 1,
**caractérisé en ce qu'**
on détecte la plage de recherche concernée, au sol, avec le capteur générateur d'image de façon que le chevauchement local de deux champs de visée, successifs, corresponde au moins à la moitié d'une image de visée.

3. Procédé selon la revendication 1,
**caractérisé en ce qu'**
à l'intérieur de chaque image on applique un procédé à seuil pour déterminer la position de la région d'image la plus claire.

4. Procédé selon la revendication 1,
**caractérisé en ce qu'**
on associe localement la position des régions d'image claire de deux images qui se suivent directement dans le temps.

5. Procédé selon la revendication 1,
**caractérisé en ce qu'**
avant d'effectuer la soustraction image par point image, on effectue une correction de position de l'une des régions d'image.

6. Procédé selon la revendication 5,
**caractérisé en ce qu'**
on applique à l'image de différence, un seuil adaptatif, dépendant de l'image pour rendre l'image ternaire.
